# EUROPEAN PATENT SPECIFICATION

(11) **EP 3 854 581 B1**
(45) Date of publication and mention of the grant of the patent: **04.11.2026**
(21) Application number: 19863537.7
(22) Date of filing: 19.09.2019
(51) Int. Cl.: B32B 15/09, B65D 8/16, B65D 65/40, B32B 27/08, B29C 69/00, C09D 175/04, B32B 27/20, B32B 15/08, C08J 5/18, C08L 63/00

(54) **LAMINATING FILM RESISTANT TO DISCOLORATION CAUSED BY COOKING, AND FILM-LAMINATED METAL SHEET**
GEGEN VERFÄRBUNG DURCH KOCHEN RESISTENTE LAMINIERFOLIE UND FOLIENLAMINIERTES METALLBLECH
FILM DE STRATIFICATION RÉSISTANT À LA DÉCOLORATION PROVOQUÉE PAR LA CUISSON, ET FEUILLE MÉTALLIQUE STRATIFIÉE PAR FILM

(30) Priority: 19.09.2018 CN 201811090597
(43) Date of publication of application: 28.07.2021
(73) Proprietor: BAOSHAN IRON & STEEL CO., LTD., Shanghai 201900 (CN)
(72) Inventor: XIE, Long, Shanghai 201900 (CN); WANG, Zhangwei, Shanghai 201900 (CN); NI, Hua, Shanghai 201900 (CN); LI, Xiujun, Shanghai 201900 (CN); CHEN, Hongxing, Shanghai 201900 (CN)
(74) Representative: Kuhnen & Wacker Patent- und Rechtsanwaltsbüro PartG mbB
(86) International application number: PCT/CN2019/106615
(87) International publication number: WO 2020/057586

(56) References cited:
- WO-A1-2015/171193
- WO-A1-2019/023411
- WO-A1-2020/010318
- CN-A- 103 144 389
- CN-A- 104 023 974
- CN-A- 104 245 307
- CN-A- 106 427 149
- CN-A- 107 475 811
- JP-A- 2004 075 924

## Description

### Technical Field

The present invention relates to the field of film-laminated metal plates for metal packaging, and more particularly to a steel-laminating film resistant to discoloration caused by cooking and a film-laminated metal plate.

### Background Art

In recent years, the development of the polyethylene terephthalate (polyester) industry is very rapid. There are a large number of well-known domestic and foreign companies producing polyester materials and polyester equipment. In 1987, the output of polyester across the world has leapt to the fifth rank among the engineering plastics. Film represents an important branch in the applications of polyester materials, and it is widely used for packaging food and beverage. In recent years, due to the rise of the technology for laminating films on metals, bonding a steel-laminating film (i.e. a film to be laminated on steel) to a metal plate by hot melt lamination has solved the problem of precipitation of harmful bis-phenol A substances caused by an indispensable step of coating the inside of metal cans in a traditional process. This problem has attracted worldwide concern. As the technology for laminating films on metal plates is spread gradually, steel-laminating films have been widely accepted as a substitute for coatings for improving the safety of canned food.

The patent documents WO 2015/171193 A1, WO 2020/010318 A1, WO 2019/023411 A1, CN 106427149 A and CN 107475811 A disclose polyester films according to prior art.

While the existing film-laminated metal plates are widely used for food and beverage packaging containers, after the cans are formed, it is often necessary to sterilize the canned food and beverage at a high temperature for a long time by high-temperature cooking. After the existing film-laminated steel/film-laminated cans are sterilized by high-temperature cooking, obvious discoloration will occur to the films, which seriously affects the appearance of the packaging containers.

### Summary

An object of the present invention is to provide a film-laminated steel having excellent resistance to cooking discoloration (discoloration caused by cooking), and the film-laminated steel has excellent overall properties when used for food and beverage packaging containers.

In order to achieve the above object, the following technical solution is adopted according to the present invention.

According to one aspect of the present invention, there is provided a blended polyester steel-laminating film resistant to cooking discoloration, wherein the blended polyester steel-laminating film comprises polyethylene terephthalate (PET) and polybutylene terephthalate (PBT), wherein the polyethylene terephthalate has a melting point of 250-265 °C and the polybutylene terephthalate has a melting point of 220-235 °C, wherein the blended polyester steel-laminating film comprises three layers including an upper layer, an intermediate layer and a lower layer, wherein at least one of the upper layer and the lower layer of the blended polyester steel-laminating film comprises 1200-2000 ppm by mass of SiO₂ added by *in-situ* polymerization, wherein each of the upper layer, the intermediate layer and the lower layer comprises the polyethylene terephthalate and the polybutylene terephthalate with a mass ratio from 6:4 to 4:6, and the mass ratios of the polyethylene terephthalate to the polybutylene terephthalate in each layer are the same or different, and wherein the blended polyester steel-laminating film has uniform crystallization property.

According to one aspect of the present invention, there is provided a blended polyester steel-laminating film resistant to cooking discoloration, wherein the blended polyester steel-laminating film comprises polyethylene terephthalate and polybutylene terephthalate, wherein the blended polyester steel-laminating film comprises three layers including an upper layer, an intermediate layer and a lower layer, wherein a skin layer (i.e. the lower layer or the upper layer) of the blended polyester steel-laminating film comprises 1800 ppm by mass of SiO₂ added by *in-situ* polymerization.

In the blended polyester steel-laminating film resistant to cooking discoloration according to one aspect of the present invention, the blended polyester steel-laminating film is a homogeneous mixture of polyethylene terephthalate and polybutylene terephthalate, wherein the three layers including the upper layer, the intermediate layer and the lower layer are formed into the blended polyester steel-laminating film by a three-layer co-extrusion biaxial stretching process.

In the blended polyester steel-laminating film resistant to cooking discoloration according to one aspect of the present invention, the blended polyester steel-laminating film is manufactured at a temperature of 240-275 °C.

In the blended polyester steel-laminating film resistant to cooking discoloration according to one aspect of the present invention, the mass ratio of polyethylene terephthalate to polybutylene terephthalate is 6:4, 5:5 or 4:6.

In the blended polyester steel-laminating film resistant to cooking discoloration according to one aspect of the present invention, the blended polyester steel-laminating film has a thickness of 12-35 µm.

According to another aspect of the present invention, there is provided a film-laminated metal plate, wherein the film-laminated metal plate comprises a metal substrate and the blended polyester steel-laminating film resistant to cooking discoloration described above.

In the film-laminated metal plate according to another aspect of the present invention, the blended polyester steel-laminating film resistant to cooking discoloration is formed by hot melt lamination at a pressure of 2-10 kg and a temperature of 180-260 °C.

In the film-laminated metal plate according to another aspect of the present invention, the skin layer comprising 1200-2000 ppm by mass of SiO₂ added by *in-situ* polymerization in the blended polyester steel-laminating film is not bonded to or in direct contact with the metal substrate.

In the film-laminated metal plate according to another aspect of the present invention, the metal substrate is selected from the group consisting of a chromium-plated steel plate, a tin-plated steel plate, a low-tin steel plate (having a tin coating weight of ≤1.1 g/m²), a galvanized steel plate, a cold-rolled steel plate, a stainless steel plate, and an aluminum plate.

According to still another aspect of the present invention, there is provided a film-laminated metal can for medium-end to high-end food or beverage packaging, wherein the film-laminated metal can is made of the film-laminated metal plate described above.

Compared with the prior art, the present invention shows the following beneficial effects:
In the present invention, the specified polyethylene terephthalate and polybutylene terephthalate are blended homogeneously at the specified ratio, and then the film is formed by a three-layer co-extrusion process, wherein one of the skin layers of the film comprises 1200-2000 ppm, preferably 1800 ppm SiO₂, so that the film-laminated metal plate prepared from the blended polyester film has excellent resistance to cooking discoloration, and may be used for a metal container for food or beverage packaging that requires high-temperature sterilization.

Due to the addition of SiO₂ to the polymer by *in-situ* polymerization, the crystallization properties of the polyester film are improved uniformly on the whole. By substituting the traditional way of adding SiO₂ in the form of master batch, addition of a high melting point resin to the film is avoided. The above two points have improved the overall performance of the polyester film significantly, and the complex processing endurance and corrosion resistance of the film-laminated steel comprising the film of the present invention have been improved notably.

### Detailed Description

In the following detailed description, the objectives, features, and advantages of the present invention will become clearer and more apparent with reference to the non-limiting examples, and the content is sufficient to enable those skilled in the art to understand and implement the present invention.

According to one aspect of the present invention, there is provided a blended polyester steel-laminating film resistant to cooking discoloration, wherein the blended polyester steel-laminating film comprises polyethylene terephthalate and polybutylene terephthalate, wherein the blended polyester steel-laminating film comprises three layers including an upper layer, an intermediate layer and a lower layer, wherein at least one skin layer of the blended polyester steel-laminating film comprises 1200-2000 ppm, preferably 1500-2000 ppm, more preferably 1800 ppm by mass of SiO₂ added by *in-situ* polymerization. Preferably, SiO₂ is added to a monomer mixture for preparing polyethylene terephthalate or polybutylene terephthalate, so that polyethylene terephthalate comprising SiO₂ or polybutylene terephthalate comprising SiO₂ is prepared by *in-situ* polymerization. In the present invention, at least one of the polyethylene terephthalate and polybutylene terephthalate used to prepare the blended polyester steel-laminating film comprises SiO₂ added by in-situ polymerization. In some preferred embodiments, the blended polyester steel-laminating film comprises polyethylene terephthalate comprising SiO₂ added by *in-situ* polymerization and polybutylene terephthalate.

In the blended polyester steel-laminating film of the present invention, the mass ratio of polyethylene terephthalate to polybutylene terephthalate ranges from 6:4 to 4:6. The mass ratio of polyethylene terephthalate to polybutylene terephthalate in each layer of the blended polyester steel-laminating film may be the same or different, provided that the ratio of the total mass of polyethylene terephthalate to the total mass of polybutylene terephthalate in the three layers is within the above range of 6:4 to 4:6, and at least one skin layer comprises the above-mentioned mass proportion of SiO₂. In some embodiments, the ratio of polyethylene terephthalate to polybutylene terephthalate is 6:4, 5:5, or 4:6.

Polyethylene terephthalate and polybutylene terephthalate suitable for the present invention may be various commercially available polyethylene terephthalate and polybutylene terephthalate. Generally, polyethylene terephthalate has a melting point of 250-265 °C, and polybutylene terephthalate has a melting point of 220-235 °C. By selecting such polyethylene terephthalate and polybutylene terephthalate, the film of the present invention prepared according to the ratio of the present invention has excellent resistance to cooking discoloration. After the film is cooked in water, an acid, a sulfur-containing aqueous solution or a similar solution at a high temperature for a long time, no cooking discoloration occurs to the surface of the film, and the surface of the film is not wrinkled or peeled from the metal plate.

In the blended polyester steel-laminating film resistant to cooking discoloration according to one aspect of the present invention, the blended polyester steel-laminating film is a homogeneous mixture of polyethylene terephthalate and polybutylene terephthalate, wherein the three layers including the upper layer, the intermediate layer and the lower layer are formed into the blended polyester steel-laminating film by a three-layer co-extrusion biaxial stretching process.

In the blended polyester steel-laminating film resistant to cooking discoloration according to one aspect of the present invention, the blended polyester steel-laminating film is manufactured at a temperature of 240-275 °C.

In the blended polyester steel-laminating film resistant to cooking discoloration according to one aspect of the present invention, the blended polyester steel-laminating film has a thickness of 12-35 µm.

### Example 1

In the method of producing a blended polyester steel-laminating film, the blended polyester steel-laminating film was manufactured by a biaxial stretching process at a manufacturing temperature of 240-275 °C. The blended polyester steel-laminating film comprised 5 parts of polyethylene terephthalate and 5 parts of polybutylene terephthalate. The melting point of polyethylene terephthalate was 250 °C, and the melting point of polybutylene terephthalate was 220°C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 1800 ppm SiO₂.

### Example 2

In the method of producing a blended polyester steel-laminating film, the blended polyester steel-laminating film was manufactured by a biaxial stretching process at a manufacturing temperature of 240-275 °C. The blended polyester steel-laminating film comprised 4 parts of polyethylene terephthalate and 6 parts of polybutylene terephthalate. The melting point of polyethylene terephthalate was 255 °C, and the melting point of polybutylene terephthalate was 230 °C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 1800 ppm SiO₂.

### Example 3

In the method of producing a blended polyester steel-laminating film, the blended polyester steel-laminating film was manufactured by a biaxial stretching process at a manufacturing temperature of 240-275 °C. The blended polyester steel-laminating film comprised 6 parts of polyethylene terephthalate and 4 parts of polybutylene terephthalate. The melting point of polyethylene terephthalate was 260 °C, and the melting point of polybutylene terephthalate was 225 °C. The blended polyester was mixed homogeneously, and made into a film by co-extrusion biaxial stretching of three layers including an upper layer, an intermediate layer and a lower layer. The film had a thickness of 20 µm. One skin layer of the blended polyester film comprised 1800 ppm SiO₂.

### Example 4

In the method of producing a blended polyester steel-laminating film, the blended polyester steel-laminating film was manufactured by a biaxial stretching process at a manufacturing temperature of 240-275 °C. The blended polyester steel-laminating film comprised 6 parts of polyethylene terephthalate and 4 parts of polybutylene terephthalate. The melting point of polyethylene terephthalate was 265 °C, and the melting point of polybutylene terephthalate was 220 °C. The blended polyester was mixed homogeneously, and made into a film by co-extrusion biaxial stretching of three layers including an upper layer, an intermediate layer and a lower layer. The film had a thickness of 35 µm. One skin layer of the blended polyester film comprised 1800 ppm SiO₂.

### Example 5

In the method of producing a blended polyester steel-laminating film, the blended polyester steel-laminating film was manufactured by a biaxial stretching process at a manufacturing temperature of 240-275 °C. The blended polyester steel-laminating film comprised 5 parts of polyethylene terephthalate and 5 parts of polybutylene terephthalate. The melting point of polyethylene terephthalate was 250 °C, and the melting point of polybutylene terephthalate was 220 °C. The blended polyester was mixed homogeneously, and made into a film by co-extrusion biaxial stretching of three layers including an upper layer, an intermediate layer and a lower layer. The film had a thickness of 12 µm. One skin layer of the blended polyester film comprised 1800 ppm SiO₂.

### Example 6

In the method of producing a blended polyester steel-laminating film, the blended polyester steel-laminating film was manufactured by a biaxial stretching process at a manufacturing temperature of 240-275 °C. The blended polyester steel-laminating film comprised 4 parts of polyethylene terephthalate and 6 parts of polybutylene terephthalate. The melting point of polyethylene terephthalate was 250 °C, and the melting point of polybutylene terephthalate was 235 °C. The blended polyester was mixed homogeneously, and made into a film by co-extrusion biaxial stretching of three layers including an upper layer, an intermediate layer and a lower layer. The film had a thickness of 35 µm. One skin layer of the blended polyester film comprised 1800 ppm SiO₂.

### Example 7

In the method of producing a blended polyester steel-laminating film, the blended polyester steel-laminating film was manufactured by a biaxial stretching process at a manufacturing temperature of 240-275 °C. The blended polyester steel-laminating film comprised 4 parts of polyethylene terephthalate and 6 parts of polybutylene terephthalate. The melting point of polyethylene terephthalate was 265 °C, and the melting point of polybutylene terephthalate was 225 °C. The blended polyester was mixed homogeneously, and made into a film by co-extrusion biaxial stretching of three layers including an upper layer, an intermediate layer and a lower layer. The film had a thickness of 12 µm. One skin layer of the blended polyester film comprised 1200 ppm SiO₂.

### Example 8

In the method of producing a blended polyester steel-laminating film, the blended polyester steel-laminating film was manufactured by a biaxial stretching process at a manufacturing temperature of 240-275 °C. The blended polyester steel-laminating film comprised 6 parts of polyethylene terephthalate and 4 parts of polybutylene terephthalate. The melting point of polyethylene terephthalate was 265 °C, and the melting point of polybutylene terephthalate was 220 °C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 2000 ppm SiO₂.

### Comparative Example 1

In the method of producing a blended polyester steel-laminating film, the blended polyester steel-laminating film was manufactured by a biaxial stretching process at a manufacturing temperature of 240-275 °C. The blended polyester steel-laminating film comprised 5 parts of polyethylene terephthalate and 5 parts of polybutylene terephthalate. The melting point of polyethylene terephthalate was 270 °C, and the melting point of polybutylene terephthalate was 215 °C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 1200 ppm SiO₂ added by *non-in-situ* polymerization.

### Comparative Example 2

In the method of producing a blended polyester steel-laminating film, the blended polyester steel-laminating film was manufactured by a biaxial stretching process at a manufacturing temperature of 240-275 °C. The blended polyester steel-laminating film comprised 6 parts of polyethylene terephthalate and 4 parts of polybutylene terephthalate. The melting point of polyethylene terephthalate was 245 °C, and the melting point of polybutylene terephthalate was 235 °C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 2000 ppm SiO₂.

### Comparative Example 3

In the method of producing a blended polyester steel-laminating film, the blended polyester steel-laminating film was manufactured by a biaxial stretching process at a manufacturing temperature of 240-275 °C. The blended polyester steel-laminating film comprised 4 parts of polyethylene terephthalate and 6 parts of polybutylene terephthalate. The melting point of polyethylene terephthalate was 270 °C, and the melting point of polybutylene terephthalate was 235 °C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 1800 ppm SiO₂ added by *non-in-situ* polymerization.

### Comparative Example 4

In the method of producing a blended polyester steel-laminating film, the blended polyester steel-laminating film was manufactured by a biaxial stretching process at a manufacturing temperature of 240-275 °C. The blended polyester steel-laminating film comprised 6 parts of polyethylene terephthalate and 4 parts of polybutylene terephthalate. The melting point of polyethylene terephthalate was 250 °C, and the melting point of polybutylene terephthalate was 215 °C. The blended polyester was mixed homogeneously, and made into a film by co-extrusion biaxial stretching of three layers including an upper layer, an intermediate layer and a lower layer. The film had a thickness of 15 µm. One skin layer of the blended polyester film comprised 1200 ppm SiO₂.

### Test Example 1

The blended polyester films prepared in Examples 1-8 were thermally laminated on the surfaces of 0.16mm thick chrome-plated steel plates at a pressure of 5 kg and a temperature of 245 °C to prepare film-laminated metal plates. The skin layer of each blended polyester film that comprised the amount of SiO₂ was the layer not in contact with the metal plate. Can bodies of can size 538 were prepared from the film-laminated metal plates using an experimental can-making mold. The results show that the films were not separated from the chromium-plated steel plates during the punching and deformation processes in the manufacture of the cans.

Similarly, the blended polyester films of Examples 1-8 were thermally laminated on the surfaces of tin-plated steel plates, low-tin steel plates, galvanized steel plates, cold-rolled steel plates, stainless steel plates, aluminum plates and the like to prepare film-laminated metal plates. The skin layer of each blended polyester film that comprised the amount of SiO₂ was the layer not in contact with the metal plate. Can bodies of can size 538 were prepared from the film-laminated metal plates using an experimental can-making mold. The results show that the films were not separated from the various steel plates during the punching and deformation processes in the manufacture of the cans.

### Test Example 2

The film-laminated metal plates prepared by the above methods were evaluated by the methods described below. The results are shown in Table 1.
(1) Cooking discoloration resistance performance
   A can body was cooked at 121 °C for 45 minutes. Visual evaluation was performed to see whether discoloration occurred to the above can body after cooking. The state where no after-cooking discoloration occurred to the film on the outer wall of the can body till the final step is excellent.
(2) Acid resistance performance: After the film-laminated steel was punched into a can (can size 538), acid resistance performance evaluation was performed to represent corrosion resistance performance evaluation. The film-laminated can was filled with a 20 g/L citric acid solution. After the can was capped, the solution was boiled at 121 °C for 30 min. After cooling, the sample was taken out, and spots corroded by the acid on the surface of the sample were observed to evaluate the acid resistance performance of the film-laminated steel.
(3) Sulfur resistance performance: After the film-laminated steel was punched into a can (can size 538), sulfur resistance performance evaluation was performed to represent corrosion resistance performance evaluation. The film-laminated can was filled with a 0.5% Na₂S solution. After the can was capped, the solution was boiled at 121 °C for 30 min. After cooling, the sample was taken out, and sulfide spots on the surface of the sample were observed to evaluate the sulfur resistance performance of the film-laminated steel.

**Table 1: Evaluation results of cooking discoloration resistance and corrosion resistance**

| Test Item | Cooking Discoloration Resistance | Acid Resistance | Sulfur Resistance |
|---|---|---|---|
| Example 1 | ⊚ | ⊚ | ⊚ |
| Example 2 | ⊚ | ⊚ | ⊚ |
| Example 3 | ⊚ | ⊚ | ⊚ |
| Example 4 | ○ | ⊚ | ⊚ |
| Example 5 | ○ | ⊚ | ⊚ |
| Example 6 | ○ | ⊚ | ⊚ |
| Example 7 | ○ | ⊚ | ⊚ |
| Example 8 | ○ | ⊚ | ⊚ |
| Comparative Example 1 | Δ | ○ | ○ |
| Comparative Example 2 | X | Δ | ○ |
| Comparative Example 3 | Δ | ○ | ○ |
| Comparative Example 4 | X | ○ | Δ |

| | | | |
|---|---|---|---|
| Note: in Table 1, X means poor; △ means mediocre; ∘ means good; ⊚ means very good. | | | |

To sum up, according to the present invention, after blended homogeneously, polyethylene terephthalate and polybutylene terephthalate were made into a film by a biaxial stretching process, wherein a blended polyester steel-laminating film having good formability and a thin thickness can be prepared. The blended polyester steel-laminating film may be used to prepare a film-laminated metal plate having excellent overall performances. The film-laminated metal plate may be used to manufacture a food or beverage packaging container, and the film-laminated metal plate and packaging container have excellent resistance to cooking discoloration.

Finally, it should be pointed out that although the present invention has been described with reference to the current specific examples, those skilled in the art should appreciate that the above examples are only used to illustrate the present invention, and are not used to limit the present invention.

## Claims

1. A blended polyester steel-laminating film resistant to cooking discoloration, wherein the blended polyester steel-laminating film comprises polyethylene terephthalate and polybutylene terephthalate, wherein the polyethylene terephthalate has a melting point of 250-265 °C and the polybutylene terephthalate has a melting point of 220-235 °C, wherein the blended polyester steel-laminating film comprises three layers including an upper layer, an intermediate layer and a lower layer, wherein at least one of the upper layer and the lower layer comprises 1200-2000 ppm by mass of SiO₂ added by in-situ polymerization, and wherein the mass ratio of the polyethylene terephthalate to the polybutylene terephthalate in the blended polyester steel-laminating film is from 6:4 to 4:6, wherein the mass ratios of the polyethylene terephthalate to the polybutylene terephthalate in the respective layers may be the same or different.

2. The blended polyester steel-laminating film according to claim 1, wherein the upper layer or the lower layer comprises 1800 ppm by mass of SiO₂ added by *in-situ* polymerization.

3. The blended polyester steel-laminating film resistant to cooking discoloration according to claim 1, wherein a mass ratio of the polyethylene terephthalate to the polybutylene terephthalate is 6:4, 5:5 or 4:6.

4. The blended polyester steel-laminating film resistant to cooking discoloration according to claim 1, wherein the blended polyester steel-laminating film has a thickness of 12-35 µm.

5. A method of manufacturing the blended polyester steel-laminating film resistant to cooking discoloration according to claim 1, wherein the method comprises forming a homogeneous mixture of the polyethylene terephthalate and the polybutylene terephthalate into the blended polyester steel-laminating film by a three-layer coextrusion biaxial stretching process.

6. The method of manufacturing the blended polyester steel-laminating film resistant to cooking discoloration according to claim 5, wherein the blended polyester steel-laminating film is manufactured at a temperature of 240-275 °C.

7. A film-laminated metal plate, wherein the film-laminated metal plate comprises a metal substrate and the blended polyester steel-laminating film according to any one of claims 1-4.

8. The film-laminated metal plate according to claim 7, wherein the metal substrate is selected from the group consisting of a chromium-plated steel plate, a tin-plated steel plate, a low-tin steel plate, a galvanized steel plate, a cold-rolled steel plate, a stainless steel plate, and an aluminum plate.

9. The film-laminated metal plate according to claim 7, wherein a skin layer of the blended polyester steel-laminating film that comprises 1200-2000 ppm by mass of SiO₂ added by *in-situ* polymerization is a layer that is not in contact with the metal substrate.

10. A method of manufacturing the film-laminated metal plate according to claim 7, wherein the method comprises thermal lamination of the blended polyester steel-laminating film on a surface of the metal substrate by hot melt lamination at a pressure of 2-10 kg and a temperature of 180-260 °C.

11. A film-laminated metal can for medium-end to high-end food or beverage packaging, wherein the film-laminated metal can is made of the film-laminated metal plate according to claim 7.

12. The film-laminated metal can according to claim 11, wherein the metal substrate of the film-laminated metal plate is selected from the group consisting of a chromium-plated steel plate, a tin-plated steel plate, a low-tin steel plate, a galvanized steel plate, a cold-rolled steel plate, a stainless steel plate, and an aluminum plate.

13. The film-laminated metal can according to claim 11, wherein in the film-laminated metal plate, a skin layer of the blended polyester steel-laminating film that comprises 1200-2000 ppm by mass of SiO₂ added by *in-situ* polymerization is a layer that is not in contact with the metal substrate.

## Patentansprüche

1. Eine vermengte Polyester-Stahl-Laminierfolie, welche gegen Verfärbungen beim Kochen beständig ist, wobei die vermengte Polyester-Stahl-Laminierfolie Polyethylenterephthalat und Polybutylenterephthalat umfasst, wobei das Polyethylenterephthalat einen Schmelzpunkt von 250-265 °C und das Polybutylenterephthalat einen Schmelzpunkt von 220-235 °C aufweist, wobei die vermengte Polyester-Stahl-Laminierfolie drei Schichten umfasst, darunter eine obere Schicht, eine mittlere Schicht und eine untere Schicht, wobei mindestens eine der oberen Schicht und der unteren Schicht 1200-2000 ppm nach Masse SiO₂ enthält, das durch *in-situ-*Polymerisation zugegeben wurde, und wobei das Massenverhältnis von Polyethylenterephthalat zu Polybutylenterephthalat in der vermengten Polyester-Stahl-Laminierfolie von 6:4 bis 4:6 ist, wobei die Massenverhältnisse von Polyethylenterephthalat zu Polybutylenterephthalat in den jeweiligen Schichten gleich oder unterschiedlich sein können.

2. Die vermengte Polyester-Stahl-Laminierfolie nach Anspruch 1, wobei die obere Schicht oder die untere Schicht 1800 ppm nach Masse SiO₂ enthält, welches durch *in-situ-*Polymerisation zugegeben wurde.

3. Die vermengte Polyester-Stahl-Laminierfolie, welche gegen Verfärbungen beim Kochen beständig ist, nach Anspruch 1, wobei das Massenverhältnis von Polyethylenterephthalat zu Polybutylenterephthalat 6:4, 5:5 oder 4:6 ist.

4. Die vermengte Polyester-Stahl-Laminierfolie, welche gegen Verfärbungen beim Kochen beständig ist, nach Anspruch 1, wobei die vermengte Polyester-Stahl-Laminierfolie eine Dicke von 12-35 µm aufweist.

5. Ein Verfahren zur Herstellung der vermengten Polyester-Stahl-Laminierfolie, welche gegen Verfärbungen beim Kochen beständig ist, nach Anspruch 1, wobei das Verfahren das Bilden einer homogenen Mischung aus Polyethylenterephthalat und Polybutylenterephthalat zu der vermengten Polyester-Stahl-Laminierfolie durch ein dreischichtiges Coextrusions- und biaxiales Streckverfahren umfasst.

6. Das Verfahren zur Herstellung der vermengten Polyester-Stahl-Laminierfolie, welche gegen Verfärbungen beim Kochen beständig ist, nach Anspruch 5, wobei die vermengte Polyester-Stahl-Laminierfolie bei einer Temperatur von 240-275 °C hergestellt wird.

7. Eine folienbeschichtete Metallplatte, wobei die folienbeschichtete Metallplatte ein Metallsubstrat und die vermengte Polyester-Stahl-Laminierfolie nach einem der Ansprüche 1 bis 4 umfasst.

8. Die folienbeschichtete Metallplatte nach Anspruch 7, wobei das Metallsubstrat aus der Gruppe ausgewählt ist, welche aus einer verchromten Stahlplatte, einer verzinnten Stahlplatte, einer zinnarmen Stahlplatte, einer verzinkten Stahlplatte, einer kaltgewalzten Stahlplatte, einer Edelstahlplatte und einer Aluminiumplatte besteht.

9. Die folienbeschichtete Metallplatte nach Anspruch 7, wobei eine Deckschicht der vermengten Polyester-Stahl-Laminierfolie, welche 1200-2000 ppm nach Masse SiO₂ enthält, welches durch *in-situ-*Polymerisation zugesetzt wurde, eine Schicht ist, welche nicht mit dem Metallsubstrat in Kontakt ist.

10. Ein Verfahren zur Herstellung der folienlaminierten Metallplatte nach Anspruch 7, wobei das Verfahren das thermische Laminieren der vermengten Polyester-Stahl-Laminierfolie auf eine Oberfläche des Metallsubstrats durch Heißschmelzlaminieren bei einem Druck von 2-10 kg und einer Temperatur von 180-260 °C umfasst.

11. Eine folienbeschichtete Metalldose für Lebensmittel- oder Getränkeverpackungen im mittleren bis oberen Preissegment, wobei die folienbeschichtete Metalldose aus der folienbeschichteten Metallplatte nach Anspruch 7 hergestellt ist.

12. Die folienlaminierte Metalldose nach Anspruch 11, wobei das Metallsubstrat der folienlaminierten Metallplatte aus der Gruppe ausgewählt ist, welche aus einer verchromten Stahlplatte, einer verzinnten Stahlplatte, einer zinnarmen Stahlplatte, einer verzinkten Stahlplatte, einer kaltgewalzten Stahlplatte, einer Edelstahlplatte und einer Aluminiumplatte besteht.

13. Die folienlaminierte Metalldose nach Anspruch 11, wobei in der folienlaminierten Metallplatte eine Deckschicht aus der vermengten Polyester-Stahl-Laminierfolie, welche 1200-2000 ppm nach Masse SiO₂ enthält, welches durch *in-situ-*Polymerisation zugesetzt wurde, eine Schicht ist, welche nicht mit dem Metallsubstrat in Kontakt ist.

## Revendications

1. Un film de laminage en acier-polyester mélangé, résistant à la décoloration due à la cuisson, dans lequel ledit film de laminage en acier-polyester mélangé comprend du polyéthylène téréphtalate et du polybutylène téréphtalate, le polyéthylène téréphtalate ayant un point de fusion de 250 à 265 °C et le polybutylène téréphtalate a un point de fusion de 220 à 235 °C, dans lequel le film de laminage en acier-polyester mélangé comprend trois couches, à savoir une couche supérieure, une couche intermédiaire et une couche inférieure, dans lequel au moins l'une parmi la couche supérieure et la couche inférieure comprend 1 200 à 2 000 ppm en masse de SiO₂ ajouté par polymérisation *in situ*, et dans lequel le rapport massique entre le polyéthylène téréphtalate et le polybutylène téréphtalate dans le film de laminage en acier-polyester mélangé est de 6:4 à 4:6, les rapports massiques entre le polyéthylène téréphtalate et le polybutylène téréphtalate dans les couches respectives pouvant être identiques ou différents.

2. Le film de laminage en acier-polyester mélangé selon la revendication 1, dans lequel la couche supérieure ou la couche inférieure comprend 1 800 ppm en masse de SiO₂ ajouté par polymérisation *in situ*.

3. Le film de laminage en acier-polyester mélangé, résistant à la décoloration due à la cuisson, selon la revendication 1, dans lequel le rapport massique entre le polyéthylène téréphtalate et le polybutylène téréphtalate est de 6:4, 5:5 ou 4:6.

4. Le film de laminage en acier-polyester mélangé, résistant à la décoloration due à la cuisson, selon la revendication 1, dans lequel le film de laminage en acier-polyester mélangé présente une épaisseur de 12-35 µm.

5. Un procédé de fabrication du film de laminage en acier-polyester mélangé, résistant à la décoloration due à la cuisson, selon la revendication 1, dans lequel le procédé comprend la formation d'un mélange homogène de polyéthylène téréphtalate et de polybutylène téréphtalate pour obtenir le film de laminage en acier-polyester mélangé, par un procédé de coextrusion à trois couches suivi d'un étirage biaxial.

6. Le procédé de fabrication du film de laminage en acier-polyester mélangé résistant à la décoloration due à la cuisson selon la revendication 5, dans lequel le film de laminage en acier-polyester mélangé est fabriqué à une température de 240 à 275 °C.

7. Une plaque métallique laminée avec un film, dans laquelle la plaque métallique laminée avec un film comprend un substrat métallique et le film de laminage en acier-polyester mélangé selon l'une quelconque des revendications 1 à 4.

8. La plaque métallique laminée avec un film selon la revendication 7, dans laquelle le substrat métallique est choisi parmi le groupe constitué d'une plaque d'acier chromée, d'une plaque d'acier étamée, d'une plaque d'acier à faible teneur en étain, d'une plaque d'acier galvanisé, d'une plaque d'acier laminée à froid, d'une plaque d'acier inoxydable et d'une plaque d'aluminium.

9. La plaque métallique laminée avec un film selon la revendication 7, dans laquelle une couche de surface du film de laminage en acier-polyester mélangé, qui comprend 1 200 à 2 000 ppm en masse de SiO₂ ajouté par polymérisation *in situ*, est une couche qui n'est pas en contact avec le substrat métallique.

10. Un procédé de fabrication de la plaque métallique laminée avec un film selon la revendication 7, dans lequel le procédé comprend le laminage thermique du film de laminage en acier-polyester mélangé sur une surface du substrat métallique par laminage à chaud sous une pression de 2 à 10 kg et à une température de 180 à 260 °C.

11. Une boîte métallique laminée avec un film destinée à l'emballage de produits alimentaires ou de boissons de gamme moyenne à haut de gamme, dans laquelle la boîte métallique laminée avec un film est constituée de la plaque métallique laminée avec un film selon la revendication 7.

12. La boîte métallique laminée avec un film selon la revendication 11, dans laquelle le substrat métallique de la plaque métallique laminée avec un film est choisi parmi le groupe constitué d'une plaque d'acier chromée, d'une plaque d'acier étamée, d'une plaque d'acier à faible teneur en étain, d'une plaque d'acier galvanisée, d'une plaque d'acier laminée à froid, d'une plaque d'acier inoxydable et d'une plaque d'aluminium.

13. La boîte métallique laminée avec un film selon la revendication 11, dans laquelle, dans la plaque métallique laminée avec un film, une couche de surface du film de laminage en acier-polyester mélangé, qui comprend 1 200 à 2 000 ppm en masse de SiO₂ ajouté par polymérisation *in situ*, est une couche qui n'est pas en contact avec le substrat métallique.
